# EUROPEAN PATENT SPECIFICATION

(11) **EP 0 466 488 B1**
(45) Date of publication and mention of the grant of the patent: **10.12.1997**
(21) Application number: 91306306.1
(22) Date of filing: 11.07.1991
(51) Int. Cl.: G03B 17/24

(54) **Photographing information recording device for camera**
Vorrichtung zur Aufzeichnung fotografischer Information für eine Kamera
Dispositif d'enregistrement d'information photographique pour une caméra

(30) Priority: 13.07.1990 JP 185875/90
(43) Date of publication of application: 15.01.1992
(73) Proprietor: NIKON CORPORATION, Tokyo (JP)
(72) Inventor: Kazami, Kazuyuki, Itabashi-ku, Tokyo (JP)
(74) Representative: Burke, Steven David

(56) References cited:
- EP-A- 0 435 227
- WO-A-81/03228
- WO-A-90/04253
- PATENT ABSTRACTS OF JAPAN vol. 9, no. 250 (P-394)8 October 1985

## Description

### BACKGROUND OF THE INVENTION

### Field of the Invention

The present invention relates to a photographing information recording device for a camera, capable of magnetically recording photographing data or information on a photographing film.

### Related Background Art

Photographing information recording device for cameras has been known which is capable of recording photographing information such as trimming data and photographing data, for each of the exposure frames, on a magnetic recording medium applied to a film.

In this type of photographing information recording device, photographing information is recorded on a predetermined position on the each exposed frame when the film is wound or fed by one frame after each exposure.

For example, see EP-A-0435277.

This known device, however, suffers from the following problems. Namely, recording of the photographing information may be failed due to a film feed failure which may occur when the battery voltage has come down below a predetermined level or when the battery cover is accidentally opened during recording of the photographing information.

Reference is also made to WO-A-90/04253 which relates to a self-clocking encoding/decoding film information exchange system using dedicated magnetic tracks on film. A virtually transparent magnetic layer is included as an additional layer in a color negative film. Information exchange between various users of the film - such as (for example) the film manufacturer, the camera user, the dealer and photofinisher - is carried via plural longitudinal magnetic tracks on the film that begin and end in individual frames. Each track is dedicated to the writing and reading of a predetermined set of parameters related to the corresponding frame. The photofinisher-dedicated tracks fill the exposed image area of each frame. The camera-dedicated tracks lie along the edges of the film between the film perforations, the perforations being widely spaced for the purpose. All data is recorded on the film using a novel self-clocking code which is completely self-clocking, in order to provide automatic data synchronization between the various users without requiring that any of them to transport the film at the same speed or even at a uniform speed when reading and writing.

Reference is also made to WO-A-81/03228 which describes a camera having electrically powered memory restoration. An electrically powered memory device stores data obtained by sensing detectable means on a film strip, but loses stored data upon a power diminution below a minimum level necessary for memory retention. When electrical power is resumed, a film drive is operated to rewind the film strip at least until the detectable means previously sensed during film advance have been returned past the film strip sensing device. Then, the film drive is operated to advance the film strip substantially the same distance it was rewound. During re-advance, the sensing device again senses the detectable means to restore lost data to the memory device.

### SUMMARY OF THE INVENTION

The present invention is defined in the claims.

With the invention, a photographic information recording device can be provided for a camera which, in the event of a film feed failure occurring during recording of photographic information, conducts recording of the photographic information after recovery from such a film feed failure.

Also with the present invention, a photographic information recording device can be provided which, upon sensing occurrence of a film feed failure during recording of photographic information, produces a signal indicative of occurrence of the film feed failure, which also re-attempts to record the photographic information.

In the preferred embodiment, a photographic information recording device is described for magnetically recording photographic information on a predetermined portion of a photographic film in a camera during feeding of the film. The device comprises:
photographing information storage means for storing photographing information for each of the exposed frames of the film;
recording means for recording the photographing information read from the storage means on each frame of the film during the feed of the film after exposure of the frame; film feeding means for feeding the film forward and backward; film feed state detecting means for outputting a film feed failure signal upon sensing occurrence of a failure in the feed of the film; and control means for controlling, in response to the film feed failure signal, the film feeding means and the recording means in such a manner as to cause the film feeding means to feed the film backward to an initial position where the recording means can conduct once again the recording of the photographing information from the starting end of the information recording region of the exposed frame with which the occurrence of the film feed failure was sensed or of one of the exposed frames which are ahead of the exposed frame with which the occurrence of the film feed failure was sensed, the control means further enabling the recording means to record the photographing information in accordance with the content of the memory means once again on the information recording region from the starting end during a repeated forward feed of the film.

The control means, upon receipt of a signal indicative of occurrence of film feed failure from the feed state detecting means, controls the film feeding means and the photographing information recording means so as to rewind the film at least by a length for setting the frame on which the feeding failure was detected back to the initial position and to record the photographing information in accordance with the content of the photographing information memory means.

It is therefore possible to record the photographing information on each frame of the film without fail.

The invention will be more fully understood from the following description of the preferred embodiment in conjunction with the accompanying drawings. It is to be understood, however, that the described embodiment is only illustrative and is not of limiting sense.

### BRIEF DESCRIPTION OF THE DRAWINGS

Fig. 1 is a block diagram of an embodiment of the present invention;
Figs. 2A to 2C are illustrations of a film which is used in combination with an embodiment of the present invention in which: Fig. 2A shows the state of the film after completion of an exposure;
Fig. 2B shows the state in which a film feed failure has occurred after the commencement of the feed of the film; and Fig. 2C shows a state in which the film has been rewound to bring the frame on which the failure has occurred to the initial position;
Fig. 3 is a flow chart showing a control program for recording the photographing information;
Fig. 4 is a flow chart of a control program which is executed after loading of battery;
Fig. 5 is a flow chart showing a sub-routine for rewinding the film to set the frame on which interruption of the recording of photographing information has occurred back to the initial position;
Fig. 6 is a flow chart showing another example of subroutine for setting the frame back to the initial position; and
Fig. 7 is a flow chart showing a routine for sensing occurrence of film feed failure.

### DETAILED DESCRIPTION OF THE PREFERRED EMBODIMENTS

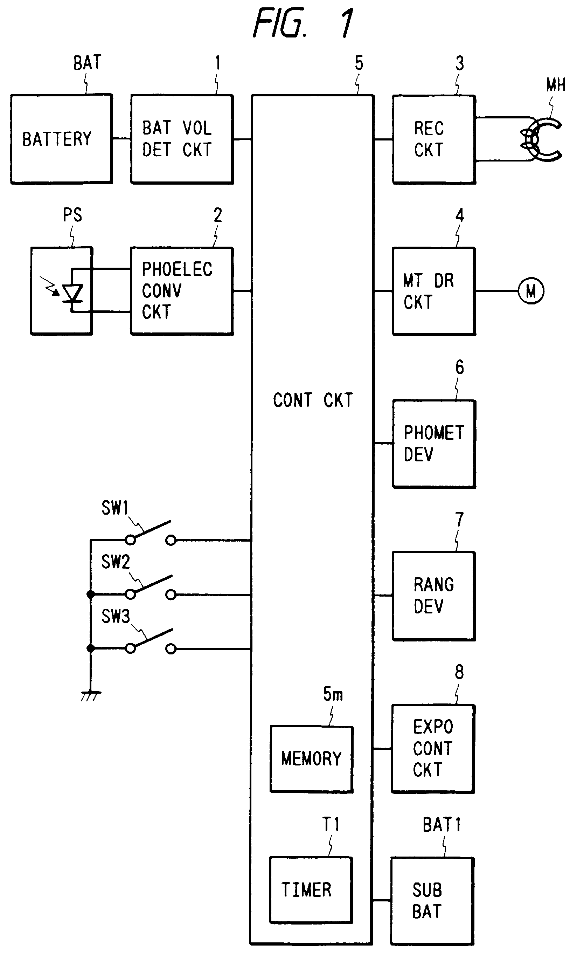

Referring to Fig. 1 which is a block diagram of an embodiment of the photographing information recording device of the present invention, a battery voltage detection circuit 1 detects any drop of the voltage of a battery BAT to a level at which a film feed motor stops to operate to cause film feed failure. A photoelectric conversion circuit 2 detects, in cooperation with a photoelectric device PS such as a photo-reflector connected thereto, perforations of a photographing film. A recording circuit 3 records, by means of a magnetic recording head MH connected thereto, various items of photographing information on the film. A motor drive circuit 4 drives the film feed motor M so as to wind and rewind the film.

A switch SW1 is turned on when the shutter release is half-pushed, while a switch SW2 is turned on when the shutter release is fully pushed. A battery cover switch SW3 is adapted to be turned on when a cover of a battery room is opened.

A control circuit 5 is composed of a microcomputer and peripheral parts such as a memory 5m, and is capable of controlling the recording circuit 3 and the motor drive circuit 4 in accordance with signals from the battery voltage detection circuit 1, photoelectric conversion circuit 2 and the switches SW1 to SW3. The memory 5m includes a EEROM which retains its content even when the voltage of the battery BAST has come down to 0V. This memory 5m is for storing photographing information. A timer T1 measures the time during feeding of the film and produces a film fed failure signal when the time is over during feeding. The control circuit 5 and the battery voltage detection circuit 1 is supplied with power from the battery BAT. In the event that the voltage of the battery BAT has come down below a predetermined level or completely to zero, a backup battery BAT1 supplies electrical power to the control circuit 5 so that the control circuit 5 can continue the operation for a predetermined time.

A photometric device 6 meters the light quantity in the image field and produces brightness information, while a range-finding device 7 measures the distance to the subject and produces range information. Numeral 8 denotes an exposure control device which controls a shutter release mechanism and a stop mechanism both of which are not shown.

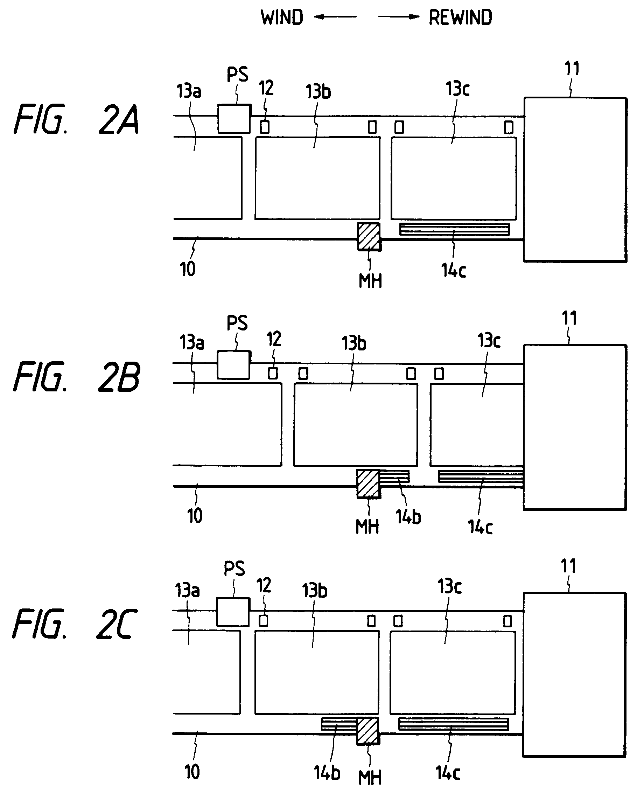

Figs. 2A to 2C in combination show a film which is used in combination with the described embodiment. More specifically, the film 10 is adapted for use in a pre-wind type camera in which a newly loaded film is taken up by a take-up spool of the camera out of the film cartridge 11 in advance of the exposure. The film is then fed back to the film cartridge 11 frame by frame upon each exposure. Perforations 12, two for each frame, are formed in one marginal edge of the film 10. These perforations are sensed by the photoelectric device PS and the photoelectric conversion circuit 2 so that data is obtained to enable counting of the number of frames used and positioning of the new frame. A magnetic recording medium for recording photographing information for each frame is applied to the other marginal edge of the film 10.

Referring to Fig. 2A, the film 10 is in such a state that a frame 13b has just been exposed and unexposed or new frame 13a is just going to be moved to a predetermined photographing position. Photographing information on the previously exposed frame 13c has been already recorded in the recording region 14c. In Fig. 2B, the feed motor M has stopped due to a voltage drop of the battery BAT immediately after the start of winding of the film from the state shown in Fig. 2A, thus causing film feed failure. As a result of the film feed failure, the photographing information concerning the frame 13b has been incompletely recorded in the recording region 14b. In Fig. 2C, the film has been rewound by the operation of the control circuit 5 so as to bring the frame 13b on which the film feed failure was detected back to the initial position which is the same as the position shown in Fig. 2A, i.e., the position where the exposure of the frame 13 was over and the film was just going to be fed.

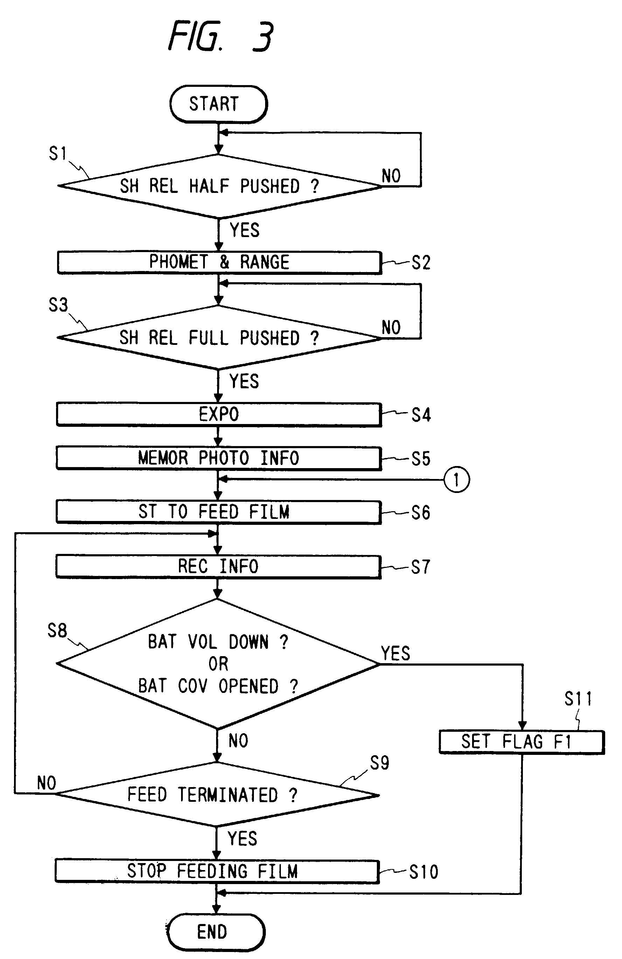

Fig. 3 is a flow chart showing the control program for recording the photographing information, executed by the control circuit 5. The operation of the photographing information recording device of the invention will be described mainly with reference to this flow chart. For an easier understanding of the description, it is assumed that film feed failure has occurred at the film position shown in Fig. 2B.

In Step S1, whether the shutter release has been half-pushed is determined by the switch SW1. This step is repeated until the half-push state of the shutter release is detected. When the half-push state of the shutter release is detected, the process proceeds to Step S2 in which the photometric device 6 is controlled to conduct photometry of the field. At the same time, the range finding device 7 is controlled to meter the distance to the subject to be photographed. In the subsequent step S3, whether the shutter release has been fully pushed is detected by the switch SW2. This step is repeated until the full push of the shutter release is detected. When full push state of the shutter release is detected, the process proceeds to Step S4 in which an exposure control device 8 is controlled to allow the frame 13b to be exposed.

In a subsequent step S5, photographing information such as trimming data, photographing date and so forth concerning the above-mentioned exposure is stored in the memory 5m. The process then proceeds to Step S6 in which the film feed motor M is started to feed the film 10 into the cartridge by a length corresponding to one frame, thereby to bring the next unexposed frame 13a to the predetermined photographing position. In Step S7, the photographing information stored in the memory 5m in the above-mentioned step is read out from the memory 5m and recorded in the recording region 14b annexed to the frame 13b while the film 10 is being fed. Step S8 is for detecting any failure such as drop of the voltage of the battery BAT or accidental opening of the battery cover. Any abnormal voltage drop of the battery BAT is detected by the battery voltage detecting circuit 1, while any accidental opening of the battery cover is detected by the switch SW3. In the event that a failure is detected in Step S8, the process jumps to Step S11, whereas, when no failure is detected, the process proceeds to Step S9 which determines whether the feed of the film 10 by one frame has been over. If the feed of the film has been completed, the process proceeds to Step S10, whereas, if not, the process returns to Step S7. In Step S10, the motor drive circuit 4 is operated to stop the film feed motor M, thus terminating feed of the film.

As stated before, when a failure, i.e., an abnormal voltage drop of the battery BAT or an accidental opening of the battery cover, is detected in Step S8, the process proceeds to Step S11. In this step S11, the program is interrupted after a flag F1 is set to indicate occurrence of film feed failure during the fed of the film 10.

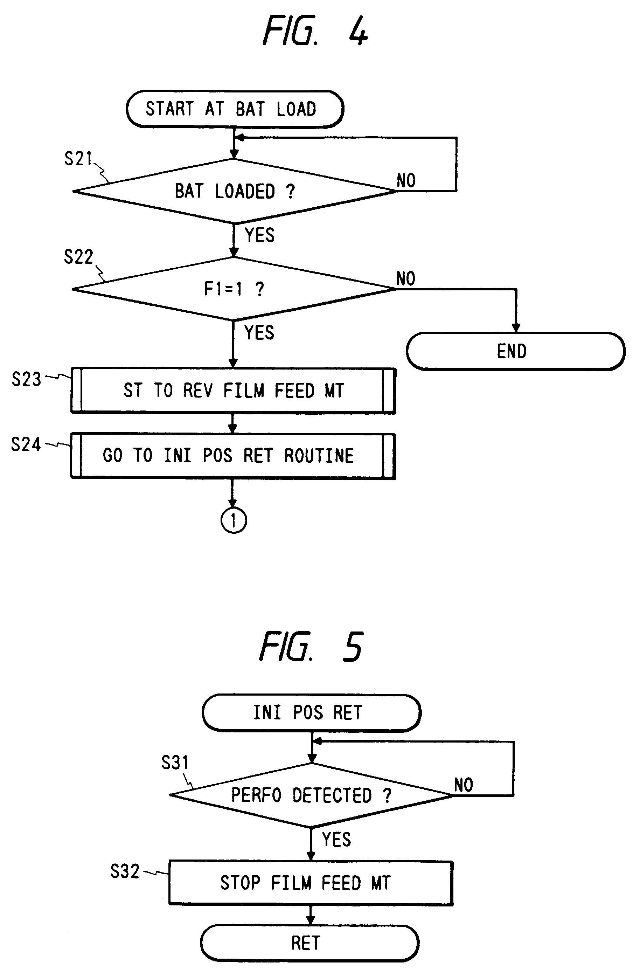

Fig. 4 is a flowchart showing a program which is executed when a new battery BAT is loaded.

In Step S21, whether the battery BAT has been loaded is determined. This step is executed repeatedly until the loading of the battery is detected. The detection is conducted by the switch SW3 which is operative in response to the state of the battery cover. When the loading of the battery BAT has been detected, the process proceeds to Step S22 in which whether the flag F1 is "1" is determined. When the film feed failure has occurred during the feed of the film, this flag F1 has been set to "1", so that the process proceeds to Step S23, otherwise this sub-routine is terminated.

In Step S23, the motor drive circuit 4 reverses the film feed motor M so as to wind the film 10 backward. Then, Step S24 is executed to conduct the initial reset sub-routine shown in Fig. 5.

Referring to Fig. 5, Step S31 determines whether the perforation 12 has been detected. It will be understood that, during the backward feed of the film from the position shown in Fig. 2B where the feed failure occurred, the perforation 12 is detected for the first time when the film has reached the initial position shown in Fig. 2A, i.e., the position at which the forward feed of the film 10 after the exposure of the frame 13b was commenced. When the perforation 12 is detected, the process proceeds to Step S32 in which the film feed motor M is stopped and the sub-routine is terminated. The process then returns to the program shown in Fig. 4. After the return, the process proceeds to Step S6 shown in Fig. 3 in which the recording of photographing information concerning the frame 13b is conducted again.

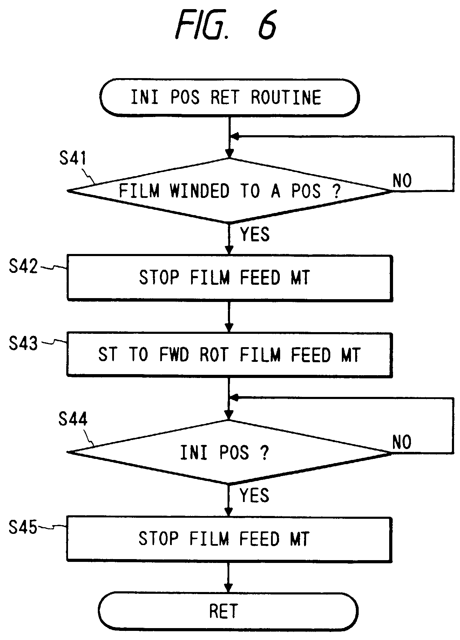

The resetting of the film to the initial position may be effected by an alternative sub routine shown in Fig. 6.

Referring to Fig. 6, Step S41 conducts backward feed of the film 10 until the frame 13c, which is ahead of the frame 13b on which the recording has been interrupted, is brought back to the photographing position. When the frame 13c has been set back to the photographing position, the process proceeds to Step S42 in which the film feed motor M is stopped. In Step S43, the film feed motor M is started to operate forward, i.e., to feed the film forward. Then, in Step S44, the feed of the film is continued until the frame 13b, with which the recording of the photographing information has been interrupted, is brought to the initial position shown in Fig. 2A. When the frame 13b has reached the initial position, the process proceeds to Step S45 in which the film feed motor M is stopped to terminate the sub-routine. The process then returns to the program shown in Fig. 4.

Thus, according to the program shown in Fig. 6, the film 10 is once fed backward until the frame 13c ahead of the frame 13b with which the recording of information has been interrupted is brought to the photographing position and then the film is fed in the direction of normal cocking direction to reset the frame 13b to the initial position. It is therefore possible to avoid any over run of the frame 13b which may otherwise occur to cause the photographing information to be recorded at a position offset from the destined recording region 14b.

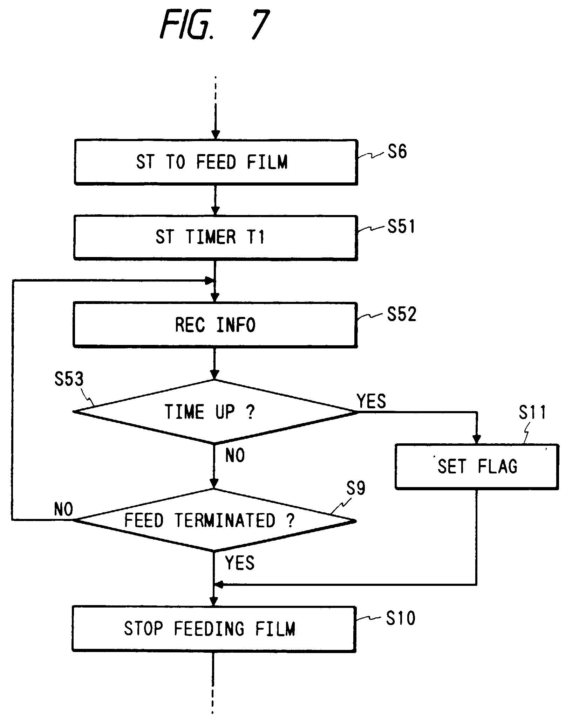

In the photographing information recording control program shown in Fig. 3, the occurrence of the failure of feed of the film 10 is detected through detection of abnormal voltage drop of the battery BAT or accidental opening of the battery cover. The occurrence of the film feed failure, however, may be detected on the basis of expiration of time, i.e., by detecting that the feed of the has not been finished even after expiration of a predetermined film feeding time. This way of control will be described with specific reference to Fig. 7. In Fig. 7, the same reference numerals are used to denote the same steps as those appearing in the flow shown in Fig. 3, and detailed description of such steps is omitted.

After the exposure of the frame 13b, the feed of the film is commenced in Step S6, Then, in Step S51, the timer T1 is started. The timer T1 is set to operate for a period which is slightly longer the time normally required for one-frame feed of the film 10. Then, recording of the photographing information is commenced in Step S52 and, in the subsequent step S53, whether the time set in the timer T1 has expired is determined. If the time has expired, the process proceeds to Step S11. In this case, since the feed of the film has not ceased in the expected time, it is determined that film feed failure has taken place. The flag F1 is therefore set. Conversely, if the time has not expired, the process proceeds to Step S9 confirming safe feed of the film.

The occurrence of a film feed failure may also be detected upon sensing any abnormal impact on the camera. Namely, the described process for recording photographing information may be performed in response to any shock applied to the camera. The described process also may be executed in the event of a film feed failure resulted from causes other than those described, i.e., reasons other than abnormal voltage drop of the battery and accidental opening of the battery cover.

As will be understood from the foregoing description, according to the invention, any film feed failure occurring during recording of photographing information on the film which is being fed after an exposure is discovered through detection of, for example, voltage drop of the battery, accidental opening of the battery cover or expiration of the expected film feed time. After the removal of cause of the film feed failure, e.g., renewal of the battery, the film is fed backward at least by a length for bringing the frame with which the information recording was interrupted to the initial position. The information is then read from the memory and recorded once again on the frame which has been set back to the initial position. It is therefore possible to record photographing information on each exposed frame without fail, despite occurrence of any film feed failure.

Although a pre-wind type camera has been specifically mentioned, it will be clear to those skilled in the art that the invention can be equally applied to normal-wind type camera.

In the described embodiment, the repeated recording of photographing information is conducted only on the frame with which the recording of information has been interrupted. This, however, is only illustrative and the invention can be modified such that, when a film feed failure has occurred, the film is completely fed back to bring the first or oldest frame to the initial or exposure position so as to rewrite the photographing information for each of the successive exposed frames.

It will be also clear from the foregoing description that the memory 5m forms the photographing information storage means, while the recording circuit 3 and the magnetic head MH in cooperation provides the recording means. It will be also clear that the motor drive circuit 4 and the film feed motor M form the film feeding means, and that the film feed failure detection means is constituted by the battery voltage detection circuit 1, battery cover switch SW3 and the timer T1 Obviously, the control circuit 5 serves as the control means.

As has been described, the photographing information recording device of the present invention operates such that, when a film feed failure is detected during recording of photographing information on a frame of the film which is being fed, the film is fed back at least by a length to bring the frame with which the recording was interrupted back to the initial position and the recording of the information is conducted once again on that frame.

It is therefore possible to record, without fail, the photographing information on each of the exposed frames of the film.

## Claims

1. Data recording apparatus for a camera, the apparatus being operable to record data on a photographic film and comprising:
film feed means (4,M) for feeding the film;
storage means (5m) for storing the data;
recording means (3,MH) for recording data from the storage means on to a predetermined portion of the film as the film is fed past the recording means;
characterised by
detecting means (1; T1; SW3) for detecting a condition associated with a film feed error, and for providing a detection indication; and
control means (5) responsive to said detection indication for operating the recording means and the film feed means so as to rewind the film and again to attempt to record said data on to said predetermined film portion.

2. Apparatus according to claim 1, wherein the recording means comprises magnetic recording means (MH) for magnetically recording the data onto a magnetic recording portion (14) of the film.

3. Apparatus according to claim 1 or 2, wherein the data storage means comprises means (5m) for storing photographing information relating to each exposed frame of the film.

4. Apparatus according to claim 1, 2, 3, wherein a said predetermined portion (14) of the film is provided at each frame (13) of the film, and the apparatus is operable to record data in a recording area (14b; 14c) at each frame, wherein the film feed means (4, M) is capable of feeding the film forwards or backwards, and said control means (5) is responsive to a said indication from the detection means, to control the film feeding means to feed the film backwards to a predetermined position corresponding to the beginning of a said recording area.

5. Apparatus according to claim 4, wherein said predetermined position is the beginning of the recording area for the last exposed frame.

6. Apparatus according to claim 4, wherein said predetermined position is the beginning of the recording area for a previously exposed frame which precedes the last exposed frame.

7. Apparatus according to claim 4, 5 or 6, wherein said control means (5) is operable to control said recording means to attempt to record again data from the storage means, during a forward feed of the film starting from the predetermined position.

8. Apparatus according to any preceding claim, wherein said detecting means comprises a battery checker (1) for providing said indication in response to detection of an abnormal voltage of a battery for driving said film feed means.

9. Apparatus according to claim 8, wherein said battery checker comprises means (1) for providing said indication in response to detection of a drop in battery voltage for driving said film feed means.

10. Apparatus according to any preceding claim, wherein said detecting means comprises a timer (T1) operable to produce said indication in response to expiry of a predetermined film feed time.

11. Apparatus according to any preceding claim, wherein said detecting means is operable to produce said indication in response to opening of a battery compartment door of the camera.

12. Apparatus according to any preceding claim, wherein said detecting means is operable to produce said indication in response to the detection of abnormal impact on the camera.

13. A camera comprising the apparatus defined in any preceding claim.

## Patentansprüche

1. Gerät zur Aufzeichnung von Daten für eine Kamera, wobei das Gerät Daten auf einen fotografischen Film aufzeichnen kann und umfaßt:
- eine Filmtransporteinrichtung (4, M) zum Transportieren des Films;
- eine Speichereinrichtung (5m) zum Speichern der Daten;
- eine Aufzeichnungseinrichtung (3, MH) zum Aufzeichnen von Daten aus der Speichereinrichtung auf einen vorbestimmten Abschnitt des Films, wenn der Film entlang der Aufzeichnungseinrichtung transportiert wird,
gekennzeichnet durch
- eine Detektionseinrichtung (1; T1; SW3) zum Detektieren eines Zustandes, der einem Filmtransportfehler zugeordnet ist, und zum Vorsehen eines Detektionskennzeichens; und
- eine Steuereinrichtung (5), die auf das Detektionskennzeichen mit der Betätigung der Aufzeichnungseinrichtung und der Filmtransporteinrichtung reagiert, so daß der Film zurückgespult wird und wieder versucht wird, die Daten auf den vorbestimmten Filmabschnitt aufzuzeichnen.

2. Gerät nach Anspruch 1, wobei
die Aufzeichnungseinrichtung eine magnetische Aufzeichnungseinrichtung (MH) zum magnetischen Aufzeichnen der Daten auf einem magnetischen Aufzeichnungsabschnitt (14) des Films aufweist.

3. Gerät nach Anspruch 1 oder 2, wobei
die Datenspeichereinrichtung Einrichtungen(5m) zum Speichern fotografischer Information umfaßt, die jeweils einem jeden belichteten Einzelbild des Films zugeordnet sind.

4. Gerät nach Anspruch 1, 2, 3, wobei
einer der vorbestimmten Abschnitte (14) des Films bei jedem Einzelbild (13) des Films vorgesehen ist und das Gerät Daten in einen Aufzeichnungsbereich (14b; 14c) bei jedem Einzelbild aufzeichnen kann, wobei die Filmtransporteinrichtung (4, M) den Film vorwärts oder rückwärts transportieren kann, und die Steuereinrichtung (5) auf ein Kennzeichen der Detektionseinrichtung reagiert, um die Filmtransporteinrichtung so zu steuern, daß der Film zurück zu einer vorbestimmten Stellung transportiert wird, die dem Beginn eines der Aufzeichnungsbereiche entspricht.

5. Gerät nach Anspruch 4, wobei
die vorbestimmte Stellung der Beginn des Aufzeichnungsbereiches des letzten belichteten Einzelbildes ist.

6. Gerät nach Anspruch 4, wobei
die vorbestimmte Stellung der Beginn des Aufzeichnungsbereiches eines vorher belichteten Einzelbildes ist, das dem letzten belichteten Einzelbild vorgeordnet ist.

7. Gerät nach Anspruch 4, 5 oder 6, wobei
die Steuereinrichtung (5) die Aufzeichnungseinrichtung so steuern kann, daß sie während eines Vorwärtstransportes des Films ausgehend von der vorbestimmten Stellung wiederum Daten von der Speichereinrichtung aufzuzeichnen versucht.

8. Gerät nach einem der vorhergehenden Ansprüche, wobei
die Detektionseinrichtung einen Batterietester (1) zum Ausgeben des Kennzeichens als Folge einer Detektion einer ungewöhnlichen Spannung einer Batterie zum Antreiben der Filmtransporteinrichtung aufweist.

9. Gerät nach Anspruch 8, wobei
der Batterietester eine Einrichtung (1) zum Ausgeben des Kennzeichens als Folge der Detektion eines Abfalls der Batteriespannung zum Antreiben der Filmtransporteinrichtung umfaßt.

10. Gerät nach einem der vorhergehenden Ansprüche, wobei
die Detektionseinrichtung einen Zeitmesser (T1) umfaßt, der das Kennzeichen als Folge eines Ablaufs einer vorbestimmten Filmtransportzeit erzeugen kann.

11. Gerät nach einem der vorhergehenden Ansprüche, wobei
die Detektionseinrichtung das Kennzeichen als Folge des Öffnens einer Batteriefachtür der Kamera erzeugen kann.

12. Gerät nach einem der vorhergehenden Ansprüche, wobei
die Detektionseinrichtung das Kennzeichen als Folge der Detektion eines ungewöhnlichen Stoßes auf die Kamera erzeugen kann.

13. Eine Kamera, die ein in einem vorhergehenden Anspruch gekennzeichnetes Gerät umfaßt.

## Revendications

1. Appareil d'enregistrement de données destiné à un appareil de prise de vue, l'appareil étant utilisable pour enregistrer des données sur un film photographique et comprenant:
des moyens d'avance du film (4, M) faisant avancer le film;
des moyens de stockage (5m) stockant les données;
des moyens d'enregistrement (3, MH) enregistrant les données des moyens de stockage sur une partie prédéterminée du film comme le film passe devant les moyens d'enregistrement;
caractérisé par
des moyens de détection (1; T1; SW3) détectant une condition associée à une erreur d'avance du film, et fournissant une indication de détection; et
des moyens de commande (5) réagissant à ladite indication de détection afin de mettre en fonctionnement les moyens d'enregistrement et les moyens d'avance du film afin de rembobiner le film et d'essayer à nouveau d'enregistrer lesdites données sur ladite partie de film prédéterminée.

2. Appareil selon la revendication 1, caractérisé en ce que les moyens d'enregistrement comprennent des moyens d'enregistrement magnétiques (MH) pour enregistrer magnétiquement les données sur une partie d'enregistrement magnétique (14) du film.

3. Appareil selon la revendication 1 ou 2, caractérisé en ce que les moyens de stockage de données comprennent des moyens (5m) pour stocker l'information concernant la prise de vue relative à chaque image exposée du film.

4. Appareil selon la revendication 1, 2 ou 3, caractérisé en ce qu'une dite partie prédéterminée (14) du film est prévue à chaque image (13) du film, et l'appareil est utilisable pour enregistrer des données sur une zone d'enregistrement (14b; 14c) à chaque image, dans lequel
les moyens d'avance du film (4, M) sont capables de faire avancer ou reculer le film, et lesdits moyens de commande (4) réagissent à une desdites indications des moyens de détection, pour commander les moyens de déplacement du film afin de faire reculer le film à une position prédéterminée correspondant au début d'une desdites zones d'enregistrement.

5. Appareil selon la revendication 4, caractérisé en ce que ladite position prédéterminée est le début de la zone d'enregistrement de la dernière image exposée.

6. Appareil selon la revendication 4, caractérisé en ce que ladite position prédéterminée est le début de la zone d'enregistrement d'une image exposée précédemment qui précède la dernière image exposée.

7. Appareil selon la revendication 4, 5 ou 6, caractérisé en ce que lesdits moyens de commande (5) sont utilisables pour commander lesdits moyens d'enregistrement afin d'essayer d'enregistrer à nouveau les données des moyens de stockage, pendant un déplacement vers l'avant du film partant de la position prédéterminée.

8. Appareil selon l'une quelconque des revendications précédentes, caractérisé en ce que lesdits moyens de détection comprennent un contrôleur de pile (1) fournissant ladite indication en réponse à la détection d'une tension anormale d'une pile afin de commander lesdits moyens d'avance du film.

9. Appareil selon la revendication 8, caractérisé en ce que ledit contrôleur de pile comprend des moyens (1) fournissant ladite indication en réponse à la détection d'une chute dans la tension de pile afin de commander lesdits moyens d'avance de film.

10. Appareil selon l'une quelconque des revendications précédentes, caractérisé en ce que lesdits moyens de détection comprennent un temporisateur (T1) utilisable pour produire ladite indication en réponse à l'expiration d'un temps prédéterminé d'avance du film.

11. Appareil selon l'une quelconque des revendications précédentes, caractérisé en ce que lesdits moyens de détection sont utilisables afin de produire ladite indication en réponse à l'ouverture d'une porte du compartiment de pile de l'appareil de prise de vue.

12. Appareil selon l'une quelconque des revendications précédentes, caractérisé en ce que lesdits moyens de détection sont utilisables afin de produire ladite indication en réponse à la détection d'un impact anormal sur l'appareil de prise de vue.

13. Appareil de prise de vue comprenant l'appareil défini dans l'une quelconque des revendications précédentes.
